## Europäisches Patentamt
## European Patent Office
## Office européen des brevets

(19)

(11) Veröffentlichungsnummer: **0 062 203**
**B1**

(12)

# EUROPÄISCHE PATENTSCHRIFT

(45) Veröffentlichungstag der Patentschrift:
02.07.86

(51) Int. Cl.⁴: **B 29 C 47/66**

(21) Anmeldenummer: 82102308.2

(22) Anmeldetag: 20.03.82

(54) Einzugsbuchse für Einschnecken-Extruder.

(30) Priorität: 07.04.81 DE 8110512 U

(43) Veröffentlichungstag der Anmeldung:
13.10.82 Patentblatt 82/41

(45) Bekanntmachung des Hinweises auf die Patenterteilung:
02.07.86 Patentblatt 86/27

(84) Benannte Vertragsstaaten:
AT BE CH DE FR GB IT LI LU NL SE

(56) Entgegenhaltungen:
DE-A-2 934 297
DE-A-2 938 048
US-A-1 904 884
US-A-2 639 464

"Plastverarbeiter", 20/1969, S. 79-88 und S. 188-190
"Kunststoff-Berater", 11/1970, S. 1071-1076

(73) Patentinhaber: Paul Kiefel GmbH, Machinenfabrik,
Cornelius- Heyl- Strasse 49, D-6520 Worms/Rhein
(DE)

(72) Erfinder: Schaeffer, Gérard, Dr. Ing.,
Grabenstrasse 6, D-6840 Lampertheim 6
Rosengarten (DE)
Erfinder: Hoffarth, Dieter, Güterhallenstrasse 45-
47, D-6520 Worms/Rhein (DE)

(74) Vertreter: Ratzel, Gerhard, Dr., Seckenheimer
Strasse 36a, D-6900 Mannheim 1 (DE)

## Beschreibung

Die Erfindung betrifft eine Einzugsbuchse für Einschnecken-Extruder zur plastifizierenden Extrusion von Kunststoffen unter hohem Massedruck mit einer Nutenbuchse aus einem verschleißfesten Werkstoff wie z.B. Werkzeugstahl oder Hartmetall, insbesondere mit konisch auslaufenden Nuten, die in einem Außenmantel sitzt, wobei durch den noch auf Druck vorbelasteten Werkstoff die maximalen Massedrücke der Schnecke abgefangen werden, und mit einem Kühlsystem, das aus einem zwischen Nutenbuchse und Außenmantel liegenden Kühlkanal besteht.

Die Verarbeitung auf Einschnecken-Extrudern von sehr hoch molekularen und hoch viskosen thermoplastischen Kunststoffen werden meistens nur noch mit Extrudern mit förderwirksamer Einzugszone durchgeführt. Dieses System, im Vergleich zu der konventionellen Extrusion bietet sehr viele Vorteile. Unter anderem erreicht man dadurch speziell hohe Ausstoßleistungen bei niedrigen Schmelztemperaturen und hohen Massedrücken, reduzierte Scherung der Kunststoffe (dadurch ist dieses System energiesparend und besonders wirtschaftlich), schonende Plastifizierung der Kunststoffe, kein thermischer oder chemischer Abbau (dadurch resultiert eine optimale Produktionsqualität) und ein besonders stabiler Extrusionsprozess, was Ausstoß-, Druck- und Schmelztemperaturpulsationen verhindert. Solche Einschnecken-Extruder der eingangs geschilderten Art sind z.B. aus der DE-A-129 34 297 bekannt.

Bei diesem System wird ein sehr hoher Wirkungsgrad der Polymerförderung und des Massendruckaufbaus, durch den Einsatz einer wassergekühlten Einzugszone mit einer Serie konisch auslaufender Nuten, die in der Bohrung der Einzugszone auf eine Länge von ca. 3 xD gleichmäßig verteilt sind, erreicht.

Als optimale Schnecken werden bei diesem System die sogenannten "Mischteilschnecken" mit Scher- und Mischzonen eingesetzt. Der Ausstoßzylinder, mit einer oder mehreren Heiz-Kühl-Manschetten wird an der Einzugszone direkt angeflanscht. Auch insoweit kann auf die genannte DE-A1-29 34 297 verwiesen werden.

Bei diesem Extrusionskonzept mit wassergekühlter und genuteter Einzugsbuchse ist eine einwand- und störungsfreie Funktion aber nur dann gewährleistet, wenn

1. die Plastifizierorgane im Einzugsbereich absolut verschleißfest sind.

Hierbei ist zu beachten, daß der Extrusion von hochmolekularem und eingefärbtem Polymer der Verschleiß durch die harten Farbpigmente und die hohen Drücke im Nutenbereich verursacht wird. Der abrasive Verschleiß der Oberflächen steigt mit einem Massedruck im Nutenbereich (bis 2000 kg/cm²) und mit der Härte der Farbprigmente (bis 1800 Härte Vickers).

2. Die Wasserkühlung in der Einzugsbuchse muß intensiv sein. Um die Friktionswärme der Granulatkörner im Nutenbereich abzuführen, ist eine vollwirksame Wasserkühlung notwendig. Jedoch je nach Wasserhärte und Verschmutzungsgrad des Kühlwassers können sich die Kühlkanäle schon nach einer kurzen Zeit verkalken, bzw. verstopfen.

Die Praxis zeigt, daß, wenn die Plastifizierorgane verschließen oder die Kühlkanäle verstopft sind, die Funktionsfähigkeit des Extruders nicht mehr gewährleistet ist. Dadurch treten dann sofort gravierende Betriebsstörungen auf. Der Förderwirkungsgrad reduziert sich sehr stark. Als Folgeerscheinung reduziert sich der Ausstoß, die Schmelztemperatur steigt, und der Massedruck geht zurück. Der Kunststoff wird dann thermisch und chemisch abgebaut. Außerdem ist der Extrusionsprozeß nicht mehr stabil, der Extruder "pumpt". Die Produktion mit einer verschlissenen oder verkalkten Einzugsbuchse ist also unmöglich, und daß extrudierte Produkt ist unbrauchbar.

Eine Lösung zu dem Verschleißproblem ist durch den Einsatz von durchgehärteten Schnecken und Nutenbuchsen aus Werkzeugstählen gebracht worden. Bei sehr belasteten Extrudern und bei der Bearbeitung von sehr abrasiven Kunststoffen mit einer hohen Prozentzahl an Farbpigmenten kann der Nuteneinsatz sogar aus Hartmetall hergestellt werden.

Bekannt sind Einzugsbuchsen, welche aus einer Nutenbuchse aus verschleiß festem Werkstoff mit konisch auslaufenden Nuten in der Bohrung bestehen.

Die Nutenbuchse mit dem Kühlkanal auf der Außenseite ist in den Außenmantel eingeschrumpft. Im Außenmantel sind Durchgangsbohrungen angebracht, die für die Befestigung der Einzugsbuchse am Extrudergetriebe vorgesehen sind.

Bei dieser Konstruktion muß, um den Bruch der Nutenbuchse zu verhindern, das Schrumpfmaß zu dem Außenmantel sehr hoch ausgelegt sein, so daß bei maximalen Massedrücken in der Schnecke bis zu 2000 kg/cm² die Nutenbuchse immer auf Druck vorgespannt ist.

Durch die extrem hohe Härte, den hohen Elastizitätsmodul sowie die niedrigen Dehnungskoeffizienten von dem Hartmetall könnte der Nuteneinsatz durch die thermischen Spannungen platzen, im Fall einer plötzlichen Wasserabkühlung einer heißen Einzugszone. Solche Betriebsstörungen können auftreten, wenn Bedienungsfehler am Extruder durchgeführt werden, speziell wenn die Einschaltung der Wasserkühlung vergessen worden ist. Bei der bekannten Konstruktion ist dieses Risiko sehr groß, wenn das kalte Kühlwasser direkt in den Kontakt mit dem Hartmetall kommt.

Bei der Herstellung der Nutenbuchse aus gehärtetem Stahl oder aus Hartmetall ist dieses Schrumpfmaß so hoch ausgelegt, daß diese Nutenbuchse nicht mehr aus dem Außenmantel herausgepreßt werden kann.

Die Reinigung der Kühlkanäle bei Verkalkung bzw. bei Verstopfung ist dadurch ohne die vollständige Zerstörung des Außenmantels nicht mehr durchführbar. Je nach Härte und Verschmutzungsgrad des Kühlwassers kann eine solche Einzugsbuchse nach einer sehr kurzen Betriebszeit durch die mangelhafte Wasserkühlung nicht mehr funktionsfähig sein und muß dann durch eine komplette, neue Einzugsbuchse ersetzt werden, obwohl noch kein Verschleiß in der Bohrung der Einzugsbuchse gemessen werden kann.

Der Erfindung liegt die Aufgabe zugrunde, eine Einzugsbuchse zu schaffen, die die Nachteile oben genannter Art vermeiden kann. Bevorzugt soll die Nutenbuchse austauschbar sein, ohne die ganze Einzugsbuchse zerstören zu müssen. Ferner müssen die Kühlkanäle ohne Zerstörung des Außenmantels regelmäßig und in einfacher Weise zu reinigen sein.

Diese Aufgabe wird erfindungsgemäß durch die im kennzeichnenden Teil des Anspruchs 1 angegebenen Merkmale gelöst. Die Nutenbuchse ist hierbei als rohrförmiger Nuteneinsatz ausgebildet, der in eine rohrförmige Armierung in dem Außenmantel mit einem Schrumpfmaß eingeschrumpft ist, durch das noch die maximalen Massedrücke der Schnecke abgefangen werden.

Bei der neuen Ausführung können thermische Spannungen im Hartmetalleinsatz nicht mehr auftreten, weil der Kühleffekt durch die Stahlmasse der Armierung ganz erheblich gedämpft wird.

Die Nutenbuchse besteht aus einem absolut verschleißfesten Nuteneinsatz, der in eine Armierung über einem nicht demontierbaren Pressitz eingeschrumpft ist. Bevorzugt ist die absolut verschleißfeste Nutenbuchse zusammen mit der Armierung demontierbar und austauschbar. Der Nuteneinsatz wird aus einem verschließfesten z.B. harten Werkstoff hergestellt. Die Armierung kann aus einem hochfesten und zähen Stahl hergestellt werden, der auf sehr hohe Zugspannung belastet werden kann.

Das Schrumpfmaß des Pressitzes zwischen Nuteneinsatz und Armierung kann so hoch ausgelegt werden, daß der Nuteneinsatz aus sprödem und hartem Werkstoff durch die hochfeste Armierung bei den maximalen Massedrücken der Schnecken immer auf Druck vorbelastet ist. Der Bruch des Nuteneinsatzes durch den Druckaufbau in der Schnecke ist deshalb nicht möglich. Die Nutenbuchse mit der Armierung ist in den Außenmantel montiert. Die Passung zwischen der Armierung und dem Außenmantel wird je nach Belastung und Anwendung des Extruders unterschiedlich ausgelegt:

1. Bei sehr hoch belasteten Spezialextrudern, bzw. bei der Verarbeitung von extremen hochviskosen Kunststoffen steigt der Massedruck in der Extruderschnecke auf so extrem hohe Werte, daß dieser nicht mehr durch die einfache Armierung abgefangen werden kann. In diesem Fall muß der Nuteneinsatz noch höher vorgespannt werden durch eine Doppelarmierung mit der Armierung und mit dem Außenmantel. Sehr hohe Vorspannungen können im Nuteneinsatz durch diese Doppelarmierung erzeugt werden.

Mit dieser Einzugsbuchsenausführung können jetzt Betriebsdrücke, bzw. kurzzeitige Überlastungen bis zu 4000 kg/cm$^2$ abgefangen werden.

2. Bei normalbelastetem Extruder wird die Passung mit einem sehr geringen Spiel, bzw. mit einem kleinen Schrumpfmaß ausgeführt. Mit einer solchen Passung ist die Demontage der Nutenbuchse ohne Zerstörung des Außenmantels möglich.

Der Nuteneinsatz ist vorzugsweise mit einer Serie konisch auslaufender Nuten versehen, die in der Bohrung der Einzugsbuchse auf eine Länge von ca. 3 x D gleichmäßig verteilt sind.

Gemäß einer weiteren bevorzugten Ausführungsform weist das Kühlsystem einen in die Außenseite der Armierung wendelförmig eingearbeiteten Kühlkanal auf.

Auf dem Außendurchmesser der Armierung kann ein Kühlkanal in die Oberfläche eingearbeitet werden. Die Reinigung der Kühlkanäle im Falle einer Verkalkung bzw. Verstopfung kann jetzt mehrmals durchgeführt werden. Die Funktionsfähigkeit der Einzugsbuchse ist jetzt gewährleistet, solange kein Verschleiß in der Bohrung vorhanden ist.

Vorzugsweise weist das Kühlsystem einen in die Innenseite des Außenmantels wendelförmig eingearbeiteten Kühlkanal auf.

Bei Verwendung von Sonderwerkstoffen, insbesondere bei sehr hochbelasteten Spezialextrudern, könnte es vorteilhaft sein, die Kühlkanäle nicht mehr wie oben beschrieben in die Armierung einzuarbeiten, sondern in die Innenseite des Außenmantels. Bei dieser Konstruktion besteht jetzt die Nutenbuchse aus dem Nuteneinsatz mit den konisch auslaufenden Nuten und der Armierung. Die Kühlkanäle werden jetzt in die Bohrung des Außenmantels eingearbeitet.

Gemäß einer weiteren besonders bevorzugten Ausführungsform ist am unteren Ende der Einzugsbuchse am Außenmantel mindestens eine Paßfeder angebracht, die in eine Aussparung der Armierung eingreift.

Die Drehsicherung zwischen der Nutenbuchse und dem Außenmantel ist durch mindestens eine Paßfeder gegeben, die mit zwei Imbusschrauben am Außenmantel befestigt sind.

Vorzugsweise besteht der Nuteneinsatz aus Hartmetall, Metalloxid oder aus einem anderen extrem harten und verschleißfesten Werkstoff.

Der Nuteneinsatz kann beispielsweise aus folgenden verschleißfesten Werkstoffen hergestellt werden: Durch gehärtete Werkzeugstähle, Hartmetall, Keramik oder Cermet.

Vorzugsweise besteht die Armierung aus einem hochfesten und elastischem Stahl.

Die Armierung kann aus einem hochfesten und zähen Stahl hergestellt werden, der auf sehr hohe Zugspannungen belastet werden kann.

Die oben beschriebene neue Einzugsbuchse bietet außer den bis jetzt beschriebenen Vorteilen noch zusätzliche Merkmale gegenüber der bekannten Konstruktion.

Erstens können gleichmäßige Druck- und Zug-Schrumpfspannungen in dem Nuteneinsatz und in der Armierung erreicht werden. Dies geschieht dadurch, daß die Kühlkanäle in dem Außendurchmesser der Armierung eingearbeitet sind. Bei der bekannten Konstruktion ist im Bereich der Kühlkanäle in der Nutenbuchse und im Außenmantel ein wesentlich niedriger Spannungszustand als im Bereich der Kontaktstege. Außerdem ist die Kontaktfläche des Pressitzes wesentlich größer als die Kontaktfläche der Stege zwischen der Nutenbuchse und dem Außenmantel der bekannten Konstruktion. Bei gleichhohen Betriebsmassedrücken in der Schnecke kann dadurch bei der neuen Einzugsbuchse das Schrumpfmaß niedriger ausgelegt werden. Durch den gleichmäßigen Spannungszustand und die einfache Ausführung des Schrumpfverbandes der neuen Konstruktion ist die Armierung nicht durch Kerbwirkungseffekte sowie Werkstoff-Ermüdungserscheinungen geschwächt.

Bei der bekannten Konstruktion bilden im Gegenteil die Durchgangsbohrungen, sowie die Wasseranschlüsse im hochbelasteten Außenmantel sehr gefährliche "Sollbruchstellen", und im Bereich der Kontaktstege können sehr schnell Werkstoff-Ermüdungserscheinungen auftreten.

Aus all diesen Gründen ist die Festigkeit sowie die Bruchsicherheit der neuen Konstruktion wesentlich höher.

Ein zweiter, weiterer Vorteil bietet die Tatsache, daß das Kühlwasser keinen direkten Kontakt zum Nuteneinsatz besitzt.

Diese neue Einzugsbuchse kann bei allen modernen Einschnecken-Extruder mit wassergekühlten und genuteten Einzugsbuchsen eingebaut werden. Diese Einzugsbuchse ist besonders wirtschaftlich für die Verarbeitung von sehr hochmolekularen und mit Pigmenten gefüllten Kunststoffen.

Verfahrenstechnische Vorteile werden beim Einsatz der neuen Einzugsbuchse im Extruder für folgende Anwendungsgebiete erreicht:

Extruder für die Herstellung von Blasfolien, Flachfolien und coextrudierten Folien,

Extruder für die Herstellung von Rohren, Profilen, Platten und anderen Halbzeugen,

Aufbereitungsextruder und Regenerierungsanlagen, Extruder für die Herstellung von Hohlkörper-Blasanlagen.

Ein Ausführungsbeispiel der Erfindung ist in der Zeichnung dargestellt und wird im folgenden näher beschrieben.

Es zeigt:

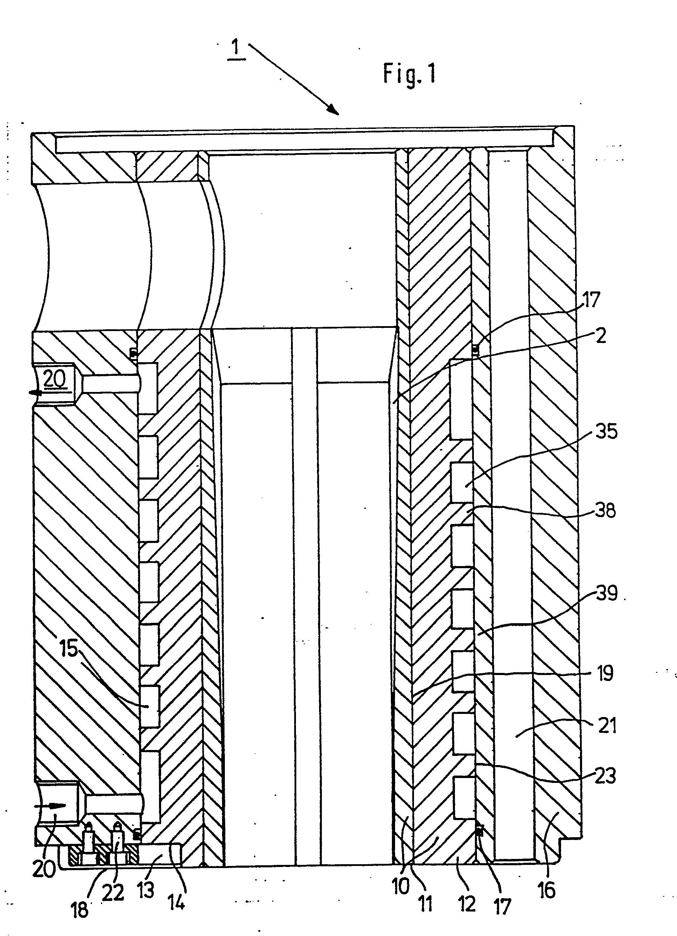

Figur 1 eine Schnittansicht einer Einzugsbuchse.

In Figur 1 ist eine Schnittansicht einer Einzugsbuchse 1 gezeigt, der Nuteneinsatz 10 besteht aus dem mit konisch auslaufenden Nuten 2 versehenen Nuteneinsatz 11 und der Armierung 12. Der absolut verschließfeste Nuteneinsatz 11 ist in die Armierung 12 über einen nicht demontierbaren Pressitz 19 eingeschrumpft. Der Nuteneinsatz 11 kann beispielsweise aus Hartmetall, Metalloxid oder aus einem anderen extrem harten und verschleißfesten Werkstoff bestehen. Die Armierung 12 wird aus einem hochfesten und zähen Stahl hergestellt, der auf sehr hohe Zugspannungen belastet werden kann. Das Schrumpfmaß des Pressitzes 19 wird so hoch ausgelegt, daß der Nuteneinsatz 11 aus sprödem und hartem Werkstoff durch die hochfeste Armierung 12 bei den maximalen Massendrücken der Extruderschnecke immer auf Druck vorbelastet ist. Der Bruch des Nuteneinsatzes 11 durch den Druckaufbau in der Schnecke ist deshalb nicht möglich. Auf die Außenseite 38 der Armierung 12 ist der Kühlkanal 35 in die Oberfläche eingearbeitet. Die oben beschriebene Nutenbuchse 10 ist in den Außenmantel 16 montiert. Zwei Dichtungsringe 17, die vor und nach dem Kühlkanal 35 angeordnet sind, gewährleisten eine einwandfreie Abdichtung. Die Bohrungen 20 sind für die Wasseranschlüsse des Kühlkanals vorgesehen. Die Durchgangsbohrungen 21 ermöglichen die Befestigung der Einzugsbuchse 1 an dem Getriebegehäuse des Extruders. Eine Drehversicherung zwischen der Nutenbuchse 10 und dem Außenmantel 16 ist durch mindestens eine Paßfeder 13 gegeben, die beispielsweise mit zwei Imbusschrauben 22 an dem Außenmantel 16 befestigt ist und in eine Aussparung 14 der Armierung eingreift.

Die Passung 23 zwischen der Armierung 12 und dem Außenmantel 16 wird je nach Belastung und Anwendung des Extruders, wie oben näher ausgeführt, verschieden ausgelegt.

Bei der Verwendung von Sonderwerkstoffen könnte es vorteilhaft sein, die Kühlkanäle 35 des Kühlsystems 15 nicht mehr in die Armierung 12 einzuarbeiten, sondern in den Außenmantel 16. Bei dieser Konstruktion besteht jetzt die Nutenbuchse 10 aus dem Nuteneinsatz 11 mit den konisch auslaufenden Nuten 2 und der Armierung 12.

Die Kühlkanäle 35 werden jetzt in die Innenseite 39 des Außenmantels 16 eingearbeitet. Dies ist nicht mehr in der Figur 1 dargestellt. Die Auslegungen der Dichtungsringe 17, der Wasseranschlußbohrungen 20, sowie der Durchgangsbohrungen 21 und der Paßfeder 13 mit den Imbusschrauben 22 sind in dieser Alternativkonstruktion unverändert.

**Liste der Bezugszeichen:**

1 Einzugbuchse
2 Nuten
10 Nutenbuchse
11 Nuteneinsatz
12 Armierung
13 Paßfeder
14 Aussparung
15 Kühlsystem
16 Außenmantel
17 Dichtungsringe
18 unteres Ende von 1
19 Pressitz
20 Bohrungen
21 Durchgangsbohrungen
22 Imbusschrauben
23 Passung
35 Kühlkanal
38 Außenseite von 12
39 Innenseite von 16

**Patentansprüche**

1. Einzugsbuchse für Einschnecken-Extruder zur plastifizierenden Extrusion von Kunststoffen unter hohem Massedruck mit einer Nutenbuchse (10) aus einem verschleißfesten Werkstoff, wie z.B. Werkzeugstahl oder Hartmetall, insbesondere mit konisch auslaufenden Nuten (2), die in einem Außenmantel (16) sitzt, wobei durch den noch auf Druck vorbelasteten Werkstoff der Nutenbuchse (10) die maximalen Massedrücke der Schnecke abgefangen werden, und mit einem Kühlsystem (15) das aus einem zwischen Nutenbuchse und Außenmantel liegenden Kühlkanal besteht, dadurch gekennzeichnet, daß die Nutenbuchse (10) aus einem rohrförmigen Nuteneinsatz (11) aus verschleißfestem Werkstoff sowie einer rohrförmigen Armierung (12) besteht, in die der Nuteneinsatz (11) über einen nicht demontierbaren Pressitz eingeschrumpft ist, und daß der oder die Kühlkanäle des Kühlsystems (15) entweder in die Außenseite der Armierung (12) oder in die Innenseite der Außenarmatur (16) eingearbeitet sind.

2. Einzugsbuchse nach Anspruch 1, dadurch gekennzeichnet, daß die Nutenbuchse (10) in dem Außenmantel (16) austauschbar montiert ist.

3. Einzugsbuchse nach Anspruch 1, dadurch gekennzeichnet, daß die Armierung (12) und der Außenmantel (16) eine vorgespannte Doppelarmierung bilden.

4. Einzugsbuchse nach einem der Ansprüche 1 bis 3, dadurch gekennzeichnet, daß der Nuteneinsatz (11) in der Armierung (12) mit einem so hohen Schrumpfmaß eingeschrumpft ist, daß er durch die Armierung (12) auch noch bei den maximalen Massedrücken der Schnecke auf Druck vorbelastet ist.

5. Einzugsbuchse nach Anspruch 2, dadurch gekennzeichnet, daß am unteren Ende (18) der Einzugsbuchse (1) am Außenmantel (16) mindestens eine Paßfeder (13) angebracht ist, die in eine Aussparung (14) der Armierung (12) eingreift.

6. Einzugsbuchse nach einem der vorherigen Ansprüche, dadurch gekennzeichnet, daß die Armierung (12) aus einem hochfesten und elastischen Stahl besteht, der auf sehr hohe Zugspannung belastet werden kann, während der Nuteneinsatz (11) aus einem harten und/oder spröden verschleiß festen Werkstoff besteht.

**Claims**

1. An entry bush for single-screw extruders for the plasticising extrusion of plastics materials under high mass compression, with a grooved sleeve (10) which consists of wear-resistant material, for example tool steel or hard metal, particularly with tapered grooves (2), and which is fitted in an outer jacket (16), wherein the maximum mass compressions of the screw are accommodated by the material of the grooved sleeve (10) still preloaded in compression, and with a cooling system (15) which comprises a cooling duct situated between the grooved sleeve and the outer jacket, characterised in that the grooved sleeve (10) comprises a tubular grooved insert (11) of wear-resistant material and also a tubular reinforcement (12) into which the grooved insert (11) is shrunk <u>via</u> a non-demountable interference fit, and in that the cooling duct or ducts of the cooling system (15) are incorporated either in the outside of the reinforcement (12) or in the inside of the outer jacket (16).

2. An entry bush according to Claim 1, characterised in that the grooved sleeve (10) is fitted in the outer jacked (16) in a replaceable manner.

3. An entry bush according to Claim 1, characterised in that the reinforcement (12) and the outer jacket (16) form a prestressed double reinforcement.

4. An entry bush according to any of Claims 1 to 3, characterised in that the grooved insert (11) is shrunk into the reinforcement (12) at such a high degree of shinkage that it is preloaded in compression even under the maximum mass compressions of the screw.

5. An entry bush according to Claim 2, characterised in that at the bottom end (18) of the entry bush (1) at least one adjusting spring (13) is applied to the outer jacket (16) and engages in a recess (14) of the reinforcement (12).

6. An entry bush according to any of the preceding claims, characterised in that the reinforcement (12) consists of a high-strength elastic steel which can be subjected to very high tensile stress, whereas the grooved insert (11) consists of a hard and/or rigid wear-resistant material.

**Revendications**

1°) Douille d'entrée pour extrudeuses à une vis sans fin destinées à extruder avec plastification des matières plastiques sous une pression de masse (pression d'extrusion) élevée, comportant une douille à rainures (10) en une matière qui résiste à l'usure, comme, par exemple, de l'acier à outils ou du métal dur, comportant en particulier des rainures (2) évasées coniquement, qui repose dans un corps extérieur (16), la matière de la douille à rainures (10) encore précontrainte en pression interceptant les pressions de masse maximales de la vis sans fin, et comportant un système de refroidissement (15) comprenant un canal de refroidissement situé entre la douille à rainures et le corps extérieur, caractérisée en ce que la douille à rainures (10) comprend une insertion tubulaire (11) constituée par une matière qui résiste à l'usure, ainsi qu'une armature tubulaire (12), dans laquelle l'insertion à rainures (11) est emmanchée avec contraction au moyen d'un ajustage serré inamovible, et en ce que le canal ou les canaux de refroidissement du système de refroidissement (15) sont formés dans la face extérieure de l'armature (12) ou dans la face intérieure du corps extérieur (16).

2°) Douille d'entrée selon la revendication 1, caractérisée en ce que la douille à rainures (10) est montée de façon amovible dans le corps extérieur (16).

3°) Douille d'entrée selon la revendication 1, caractérisée en ce que l'armature (12) et le corps extérieur (16) constituent une double armature précontrainte.

4°) Douille d'entrée selon l'une quelconque des revendications 1 à 3, caractérisée en ce que l'insertion à rainures (11) est emmanchée par retrait dans l'armature (12), avec un retrait suffisant pour qu'elle soit encore précontrainte en pression par l'armature (12) pour les pressions de masse (d'extrusion) maximales de la vis sans fin.

5°) Douille d'entrée selon la revendication 2, caractérisée en ce qu'au moins une clavette d'ajustage (13) pénétrant dans un évidement (14) de l'armature (12) est placée à l'extrémité inférieure (18) de la douille d'entrée (1) sur le corps extérieur (16).

6°) Douille d'entrée selon l'une quelconque des revendications précédentes, caractérisée en ce que l'armature (12) est constituée par un acier à résistance élevée et élastique, pouvant supporter de très fortes contraintes de traction, tandis que l'insertion à rainures (11) est constituée par une matière dure et/ou cassante qui résiste à l'usure.

Fig. 1

1